# EUROPEAN PATENT SPECIFICATION

(11) **EP 1 088 632 B1**
(45) Date of publication and mention of the grant of the patent: **09.03.2011**
(21) Application number: 00120754.7
(22) Date of filing: 22.09.2000
(51) Int. Cl.: C04B 38/10, C04B 28/00, C04B 28/14, B28C 5/38

(54) **Method and apparatus for producing an inorganic foam structure for use as a durable acoustical panel**
Verfahren und Vorrichtung zur Herstellung einer porösen anorganischen Struktur zur Verwendung als akustische Platte
Procédé et appareil pour la fabrication d'une structure en mousse inorganique à utiliser comme panneau acoustique durable

(30) Priority: 01.10.1999 US 157269 P; 01.10.1999 US 157301 P; 31.01.2000 US 179367 P; 31.01.2000 US 179385 P; 31.01.2000 US 179420 P
(43) Date of publication of application: 04.04.2001
(73) Proprietor: Armstrong World Industries, Inc., Lancaster Pennsylvania 17603 (US)
(72) Inventor: Putt, Dean L., Lititz, Pennsylvania 17543 (US); Hartman, John J. Jr., Millersville, Pennsylvania 17551 (US); Hallett, Chester W., 21901 North East, Maryland (US); Moser, Andrea M., Millersville, Pennsylvania 17551 (US)
(74) Representative: Finck, Dieter

(56) References cited:
- EP-A- 0 153 588
- EP-A- 0 592 837
- DE-B- 1 033 123
- DE-B- 1 117 467
- FR-A- 2 287 978
- GB-A- 870 937
- US-A- 4 031 285
- US-A- 4 042 745
- US-A- 4 441 944
- US-A- 4 613 627
- US-A- 5 076 985
- US-A- 5 160 411
- US-A- 5 227 100
- US-A- 5 824 148

## Description

### FIELD OF THE INVENTION

The present invention relates to the field of building materials, and more particularly to a method for producing cementitious materials designed for acoustic absorbency. The cement of the foamed cementitious composition may be a hydraulic cement including, but not limited to portland, gypsum, sorrel, slag, fly ash or calcium alumina cement. Additionally, the gypsum may include a calcium sulfate alpha hemihydrate or calcium sulfate beta hemihydrate, natural, synthetic or chemically modified calcium sulfate beta hemihydrate as well as mixtures of the above-referenced cement ingredients.

From US 5 824 148 is known a method of making a sound absorbing cementitious composition involving a preformed foam solution made from a surfactant preblended with water at a dilution ratio in a range of water to surfactant of from about 40:1 1 to 10:1. Thereafter, the preformed foam solution is combined with components including cement, aggregate, water and optional additives.

US 5 227 100 discloses a process for producing a panel with a pore structure, wherein calcium sulphate alpha-hemihydrate, water in a slightly more than stoichiometric quantity, setting retarders and/or accelerators and additives are mixed to form a pourable suspension and subjected to a suitable forming. The ground calcium sulphate alpha-hemihydrate is combined with calcium sulphate beta-hemihydrate in a quantity of up to 30% by weight relative to the calcium sulphate alpha-hemihydrate, and mixed before forming with a surfactant foam of a density in the range from 40 to 80 kg/m³ and a uniform defined pore size, in a quantity for adjusting the apparent density of the gypsum building material to a defined value in the range from 300 to 1200 kg/m³.

From US 4 031 285 is known a lightweight, reinforced structural material, having low density and high flexure and compression strengths, being prepared by combining together inorganic cementitious material and organic polymer-forming material to form a mixture and forming the mixture into a slab while embedding elongate reinforcing members which are relatively rigid in the depth dimension of the slab.

US 5 076 985 describes a process for consistently making ceiling tiles having uniform density and surface texture, wherein the process includes using a conveyor along which trays are moved in a generally horizontal direction.

From US 4 613 627 is known a wet process for the manufacture of acoustical ceiling boards, wherein the ceiling board binder is foamed prior to being combined with the solids.

### BACKGROUND OF THE INVENTION

Acoustical panels for walls and ceilings provide sound absorption, aesthetics, and separate utility space in ceilings. Manufacturers strive to develop decorative acoustical wall and ceiling panels at the lowest possible cost by continuously refining the manufacturing process in an effort to reduce energy use, materials costs and waste. While cost reduction is important, there is an inherent limit to how much the process can be simplified and still produce a panel that meets the requirements of acoustical performance, moisture resistance, and fire resistance.

Typical wallboard manufacturing begins with gypsum that is mined and crushed as gypsum rock or obtained synthetically from flu gas desulfurization plants. In the calcination process, the powdered gypsum is heated to dehydrate the gypsum to a hemihydrate. The calcined gypsum or hemihydrate is known as stucco. Fillers such as perlite and fiberglass are added to the stucco to achieve the desired properties of the finished wallboard. Other additives include starch to help adhere the core to the paper face. Retarders and accelerators may be added to adjust the reaction rate. These ingredients are combined with water and soap foam in a high speed or pin mixer. Although soap foam is added to lower the core density, the resulting structure may not have sufficient porosity to be considered acoustic. The resulting mixture is placed between two sheets of paper and sized for thickness by a roller. After the core sets up, the board is cut to length then transferred to an oven to dry.

Current methods of producing acoustical ceiling panels utilize various combinations of fibers, fillers, binders, water and/or surfactants mixed into a slurry that is processed into panels. The process is very similar to the methods used in papermaking. Examples of fibers used may include mineral fiber, fiberglass, and cellulosic material. Mineral wool is a lightweight, vitreous, silica-based material spun into a fibrous structure similar to fiberglass and may also be used. Mineral wool enhances acoustical performance, fire resistance, and sag resistance of an acoustic panel.

Fillers may include expanded perlite and clay. Expanded perlite reduces material density and clay enhances fire resistance of the acoustical panel. Examples of binders used in acoustical panels may include starch, latex and/or reconstituted paper products, which link together and create a binding system that locks all of the ingredients into a structural matrix.

The above ingredients, when combined and processed appropriately, produce a porous, sound absorbent panel suitable for use as acoustic ceiling panels and other types of construction panels. Today, such panels are manufactured using very high volume processes that resemble paper production.

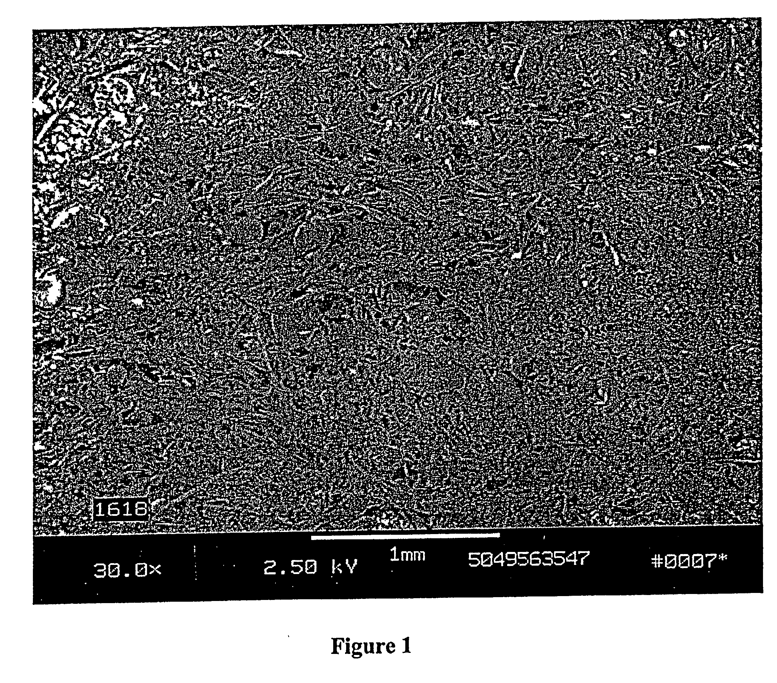

An aqueous cellular foam, that entrains air, forms as a result of the process of combining fibers, fillers and binders. The aqueous cellular foam eventually dries to provide a stable structure within which fiber, binders and fillers may settle and bond to create a matrix. The aqueous cellular foam mixture may include a surfactant to facilitate the entrainment of air into the mixture. The structure of a typical prior art ceiling panel material is shown in the 30x photomicrograph of Figure 1. The perlite particles are discernable as round nodules embedded in an interconnecting matrix of mineral wool and reconstituted newsprint fibers.

Current processes for manufacturing ceiling panels are complex, include many steps, and use large amounts of water and energy. During the process, water is progressively removed from the product through a combination of draining, pressing, and high-temperature oven heating. Some drained water may be recycled, but a majority is treated and released into the environment.

Different production processes and slurry recipes yield panels with differing acoustical and structural characteristics. There is a tradeoff between the acoustical performance and the durability. A highly porous, low-density material may exhibit the best acoustical performance. Unfortunately, a low-density material tends to be fragile and difficult to handle and exhibits low durability, low scrubability, and low tensile strength. For the purpose of this disclosure, the term durability refers to a panel's compressive yield strength which is a measure of how easily the panel material deforms under compression. Resistance to finger indentation is an example of good compressive yield strength. Scrubability is the resistance to abrasion by repeated back and forth motion of a wet scrub brush. Tensile strength refers to the ability to lift or support a panel along one edge without the panel breaking.

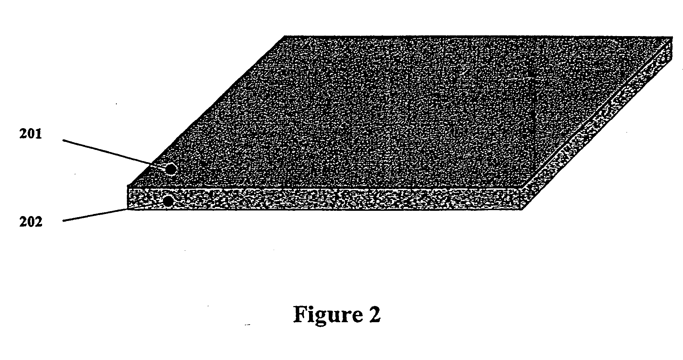

Various processes and recipes are used to balance the tradeoffs inherent in the manufacture of acoustical ceiling panels. For example, one common structure for a ceiling panel is a laminate, using different layers of material, as shown in Figure 2. One layer 201 comprises a soft, acoustically absorbent material, while the other layer 202, which faces into the room, is a more durable, sometimes structural material that is relatively transparent to sound. The acoustical performance of the panel is largely a function of layer 201, while layer 202 enhances the durability, scrubability, and aesthetics. The outer layer 202 in Figure 2 may be a third-party supplied material. Normally, an adhesive attaches overlay 202 to layer 201. Other steps involved in the manufacture of such laminated panels include painting, cutting to size, and packaging.

Laminated panels provide a good balance between performance and durability. Such panels have the advantage of being susceptible to continuous manufacturing processing in certain steps, but require additional process steps and additional materials, e.g. the outer layer material and adhesive, which are not required when producing a homogeneous panel. Furthermore, the outer layer material usually is a high-cost constituent and the lamination process requires additional machinery, materials, and human resources. While the production of the acoustical material 201 component can typically be done in continuous fashion, the lamination step is not a continuous process. As a result, laminated panels are relatively expensive to manufacture.

Casting or molding processes are also used to create a panel structure as in Figure 1. Casting produces a homogeneous material that is very durable and has good acoustical properties. Cast materials generally have a much higher density, and do not require an additional layer present in laminated construction. Casting is essentially a batch process in which the material is poured into a mold. The bottom of the mold is typically lined with a carrier or release agent to prevent sticking. The materials are dried in the mold, the mold is removed, and the panel undergoes a finishing process. Molded panels usually have good mechanical strength properties and exhibit good durability with acoustical performance generally not as good as a laminated panel. Drawbacks to the molding process include: the requirement of moving molds continuously throughout the process, smaller panels resulting from mold size constraints; the requirement of the added step of panel removal from the molds; and higher material cost per panel because of increased panel density.

Another common method of producing a panel having the structure shown in Figure 1 is to extrude slurry onto a wire belt, and allow the water to drain and /or drive the water from the slurry. Other process steps include forming, drying, and surfacing or sanding resulting panels to create the desired texture in a nearly continuous process to produce an acoustically absorbent layer. Other process steps such as embossing or punching small holes into the material may further enhance the acoustical absorbency of the panel. Disadvantages include high energy costs for drying and the treating of discharge water.

With the foregoing problems in mind, there is a need to produce a low-density material for use in ceiling and other structural panels having good acoustical performance, while maintaining structural durability of the material.

Additionally, there is a need to produce a panel with high sag resistance, improved durability, a high Noise Reduction Coefficient (NRC) and a high Sound Transmission Coefficient (STC).

Furthermore there is a need to create a panel that does not require additional additives to enhance fire resistance and to create a non-homogeneous panel with a hard, high-density surface on at least one side.

### SUMMARY OF THE INVENTION

The present invention provides for a process for creating an acoustically absorbent porous panel comprising the steps of dispensing dry cementitious material, dispensing fibers to create a dry mix and aqueous mixing water, surfactant and air to create a foam. Then the process provides for combining and mixing the foam and dry mix to form a foamed cementitious material comprising on a wet basis 53% to 68% by weight cement, 17% to 48% by weight water, 0.05% to 5% by weight fibers, and about 0.01 % to 10% by weight surfactant, regulating thereby the temperature of the aqueous mixture to a temperature between 5°C (41°F) to 75,6 °C (168 °F). The foamed cementitious material is then dried or cured.

Additionally, the process provides for creating acoustical ceiling panels comprising the steps of dry mixing cement, calcium silicate and fibers in a dry mixer to create a dry mix and aqueous mixing water and surfactant in an aqueous mixer to create a diluted surfactant solution. Then combining and mixing the diluted surfactant solution, air and dry mix in a combining mixer to create a foamed cementitious material. The foamed cementitious material is then dried in a drying chamber to form an absorbent porous panel having a density between 160 kg/m³ and 640 kg/m³ (10 and 40 lb/ft³), a Hess rake finger scratch test result of at least 12, a Noise Reduction Coefficient of at least 0.5, and a sag test result of less than 0,381 cm (0.15 inches) at 90% RH.

Furthermore the process provides for creating acoustical ceiling panels comprising the steps of dry mixing cement and synthetic organic fibers to create a dry mix and aqueous mixing water and surfactant to create a diluted surfactant solution. Then combining and mixing the foam and dry mix to form a foamed cementitious material comprising on a wet basis 56% to 61% by weight cement, 32% to 42% by weight water, 0.28% to 1.3% by weight fibers, and 0.7% to 2% by weight surfactant. The foamed cementitious material is then dried.

The described process also includes removing the high-density skin layer from one side of a foamed cementitious panel to expose the low-density matrix for acoustical purposes. Additionally, the process may create an acoustical panel with enhanced fire resistance.

Furthermore the apparatus provides means for creating acoustical panels comprising a dispenser to convey cementitious material an aqueous mixer for aqueous mixing water and surfactant to create a diluted surfactant solution, a combining mixer for combining and mixing the foam and dry mix to form a foamed cementitious material and a dispenser to convey fibrous material. The fibrous material may be combined with the foam and cementitious material after exiting the combining mixer. In one embodiment the foamed cementitious material comprising on a wet basis 56% to 61% by weight cementitious material, 32% to 42% by weight water, 0.28% to 1.3% by weight fibers, and 0.7% to 2% by weight surfactant. The foamed cementitious material is then dried in a drying chamber.

The described apparatus also includes a sander for removing the high-density skin layer from one side of a foamed cementitious panel to expose a low-density matrix for acoustical purposes. Additionally, the apparatus may create an acoustical panel with enhanced fire resistance.

These and other features and aspects of the present invention will become apparent upon reading the following specification, when taken in conjunction with the accompanying drawings.

### DESCRIPTION OF THE DRAWINGS

Figure 1 is 30x photomicrograph of a mineral wool-based material made in accordance with the prior art.
Figure 2 is a schematic, perspective representation of a laminate-based acoustic panel made in accordance with the prior art.
Figure 3 is a schematic representation of a process for producing an inorganic cementitious foam structure for use as a durable acoustical panel.

### DETAILED DESCRIPTION OF THE INVENTION

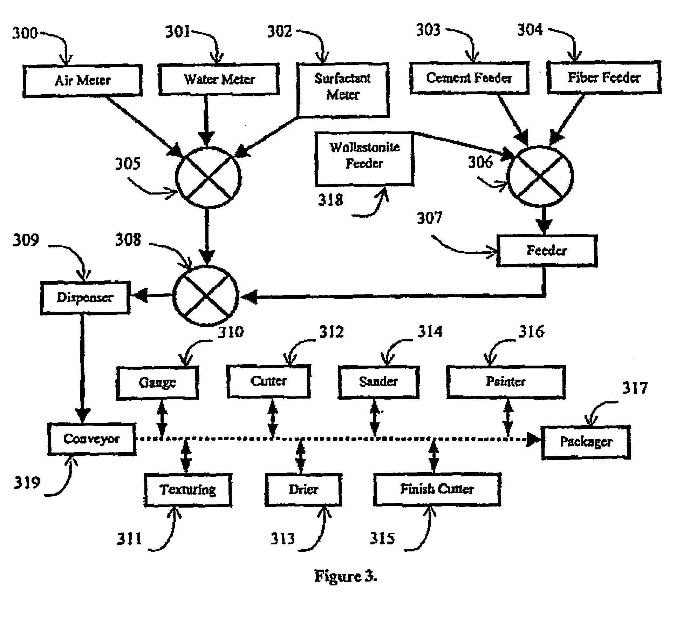

The present invention comprises a method and apparatus for producing a foamed cementitious material having acoustical, good compression strength, excellent surface durability (such as scratch resistance), and dimensional stability under humid conditions (such as sag resistance) as illustrated in Figure 3. The method broadly comprises the steps of dispensing dry ingredients, aqueous mixing liquid and gaseous ingredients, combining the dry and aqueous mix, dispensing, texturing, cutting, drying, sanding, finish cutting and sealing. The apparatus broadly comprises a dry mixer, aqueous mixer, combining mixer, dispenser, embosser, cutter, drying chamber, sander, finish cutter and spray chamber.

Essentially, the process begins with dispensing dry fibers and cement. Optionally the dry fibers and cement may be combined to create a dry mix. Water, surfactant and air are mixed to create a foam which is combined and mixed with the dry ingredients or dry mix to form a foamed cementitious material. The mixed foamed cementitious material on a wet basis can comprise 53% to 68% by weight cement, 17% to 48% by weight water, 0.05% to 5% weight fibers, and 0.01% to 10% weight surfactant.

The apparatus for continuously producing the porous inorganic material comprises a station for proportioning and dry mixing cementitious material, such as, fibers and other aggregates if necessary; a station for proportioning wet ingredients, including water, air and surfactant; a station for combining the wet and dry mixtures into an aqueous foam material; a station for gauging a thickness of the dispensed material; a station for texturing the material; a station cutting a width of the material; a station for sanding the material; a station for finish cutting the material into individual panels; a station for sealing and painting the panels; and a station for packaging the panels.

Essentially, the apparatus begins with a dry mixer for dry mixing fibers and cement to create a dry mix, and aqueous mixing water surfactant and air to create a foam which is combined and mixed with the dry mix to form a foamed cementitious material. The mixed foamed cementitious material on a wet basis can comprise 53% to 68% by weight cementitious material, 17% to 48% by weight water, 0.05% to 5% weight fibers, and 0.01% to 10% weight surfactant.

Other formulations for the mixed, foamed cementitious material on a wet weight percentage may include 54% to 61 % cement; 32% to 44% water; 0.1 to 3% fibers; and 0.5% to 5% surfactant. Additionally, the foamed cementitious material in uncured, wet weight percentages may include 56% to 61 % cement; 32% to 42% water; 0.28% to 1.3% fibers; and 0.7% to 2% surfactant.

Once the foamed cementitious material is produced it may then be dispensed onto a conveyer so that the process may be a continuous one. The foamed cementitious material may then be gauged to a desired thickness with a width determined by side-dams restraining the material on the conveyer. A texture may also be added to the foamed cementitious material by an embossing process to add a decorative or acoustically functional pattern to the surface of the material. The foamed cementitious material can then be cut to a desired length determined by the application of the resulting acoustically absorbent panel.

The cut foamed cementitious material is then dried to a moisture content of about 5% or less or about to the point where the surface of the cut foamed cementitious material or panel can be sanded. Once dried, the panels typically have a density between 160 kg/m³ (10 lbs/ft³) and 640 kg/m³ (40 lbs/ft³). In an alternative embodiment the panel can have a density between 240 kg/m³ (15 lbs/ft³) and 560 kg/m³ (35 lbs/ft³) or between 320 kg/m³ (20 lbs/ft³) and 480 kg/m³ (30 lbs/ft³).

Additionally, a hard dense skin layer is formed on the outer surfaces of the formed panel comprising less than 1 % to 2% of the total thickness of the formed panel. This dense layer is removed from one side of the panel to increase the acoustical absorbency of the panel and is usually removed by sanding.

After sanding, the panels can undergo a finish cutting and the application of an organic coating or sealant. The applied coating adds both to the aesthetics of the panel and to its surface integrity.

Acoustical absorption is a function of sound energy that is both reflected in part and absorbed in part. By removing the dense layer the inner matrix of pores formed within the panel become exposed whereby acoustic energy can be transmitted through the panels or converted into heat by the panel material. The amount of sound energy absorbed by a material is determined by a standardized test procedure ASTM C423-90a entitled "Standard Test Method for Sound Absorption and Sound Absorption Coefficients by he Reverberation Room Method". Absorption is expressed as the ratio of the sound energy absorbed to the sound energy incident to the panel surface. Sound absorption data is often combined into a single number called the Noise Reduction Coefficient which is obtained from the average value of A at 250, 500, 1000 and 2000 Hz rounded to the nearest multiple of 0.05. The higher the NRC value, the greater the average sound absorption in this frequency range. The present acoustically absorbent porous panels typically have Noise Reduction Coefficient of greater than 0.5. In an additional embodiment, the panels have a NRC of greater than 0.6 and in a further embodiment the panels have a NRC of greater than 0.7. Tests having STC results are determined by an insertion loss as set forth in ASTM E 90.

Surface integrity is typically measured as a function of the hardness and is often measured using a scratch resistance test using a scaled score of 10 to 25, wherein the larger figure indicates a more scratch resistance. In the present invention the panels have a scratch resistance test value of about 12 or greater. When the surface of the panel is coated with an organic coating, such as paint, the value is typically at least 16 and can be as great as at least 22 when two coats of paint are applied to the panel. Typically, the panels average between about 12 and 14 for the uncoated panel and between about 16 to 18 for a panel with a single coat of paint.

### SCRATCH RESISTANCE TEST

The test consists of "raking" various thicknesses of "feeler" gauge (spring steel) stock across the face or edge of a ceiling tile or panel. The measure is the highest "feeler" gauge thickness (in thousandths of an centimeter (inch)) that does not damage the test material. The metal tongues or fingers are securely arranged evenly in a row and each has a protruding length of approximately 4,763 cm (1.875 inches). The thickness of the tongues increase from one end of the row to the other end. The tongue thicknesses are 254 µm, 304.8 µm, 355.6 µm, 406.4 µm, 457.2 µm, 508 µm, 558 µm and 635 µm (correspondingly 10, 12, 14, 16, 18, 20, 22, and 25 mils) with corresponding increase in stiffness. The sample is placed in a holder below the set of tongues with the sample flange lower than the cutout forming the flange. The tongues are allowed to overlap across the top edge of the sample with the bottom of the tongue a distance of approximately 5,56 mm (7/32 inches) below the surface of the sample in the cutout forming the flange. The tongues are then drawn across the sample at a speed of 50,8 cm/min (20 inches per minute). The thicker tongues will cause a scratch more easily and damage the edge more easily than the thinner tongues.

Additionally, hardness can be determined as a function of compression resistance as set forth in ASTM C 367. The test was modified by the use of a 2,54 cm (1-inch) ball, 133 Newtons (30-lbs) force and a cross head speed of 1.27 cm/min (½ inch/min). In the present invention the panels typically have a compression resistance of less than 0.305 cm (0.12 inches). In an alternative embodiment the compression resistance can be less than 0.254 cm (0.1 inches) and in a second embodiment the compression resistance can be less than 0.203 cm (0.08 inches).

The formed acoustically absorbent cementitious porous panels are also relatively resistant to moisture. This can be quantified as a value determined from a sag test. The following are approximate four-cycle sag test ranges for various embodiments. Each cycle consists of subjecting the 0.61 m by 0.61 m (2ft by 2 ft) sample to 17 hours at 27.8°C (82°F) and 90% RH followed by 6 hours at 27.8 °C(82°F) and 35% RH. In one embodiment, at 90% RH there is typically a resulting sag of less than 0.381 cm (0.15 inches). In a second embodiment, at 90% RH there is typically a resulting sag of less than 0.254 cm (0.1 inches). In a third embodiment, at 90% RH there is typically a resulting sag of less than 0.127 cm (0.05 inches).

The cement of the foamed cementitious composition may be a hydraulic cement including, but not limited to, portland, sorrel, slag, fly ash or calcium alumina cement. Additionally, the cement may include a calcium sulfate alpha hemihydrate or calcium sulfate beta hemihydrate, natural, synthetic or chemically modified calcium sulfate beta hemihydrate, as well as mixtures of the above-referenced cement ingredients. For example, the invention may comprise a mixture of calcium alumina cement and portland cement to give a faster set time.

The foamed cementitious composition may also include additives that contribute to the overall hardness of the foamed cement. Such a degree of cement hardness is desired to improve durability and resistance to indention and impact damage. Additives that may contribute to the overall hardness of portland cement generally contain calcium and/or silica compounds. Examples of calcium-based hardeners include calcium oxide, calcium hydroxide and carbonates. Silica additives may include sodium silicate, mica, finely ground sand, and certain ashes high in silica content such as, rice hull ash and fly ash. In the preferred embodiment, an additive to improve strength and maintain foam density is calcium silicate. A fibrous grade of calcium silicate known as wollastonite or Orleans One is utilized in the preferred embodiment.

The foam cementitious composition may also include inorganic fiber materials, such as fiberglass and mineral wool. In an embodiment, the foamed cementitious composition includes polyester fibers of 0.635 cm to 1.905 cm (0.25 to 0.75 inches) long, with the preferred length of 1.27 cm (0.5 inches), and having a diameter of 12.7 µm to 177.8 µm (0.0005 to 0.007 inches). Longer fibers tend to clump more readily in the mixing steps, and shorter fibers tend to reduce tensile strength.

The present invention may also include a surfactant for the purpose of creating foam during the mixing process. The foaming effect within the cement is important because it allows the creation of an open cell structure within the mixture to improve acoustic absorption performance of the cement. The surfactants may include amphoteric, anionic, and nonionic moieties with a hydrophobic molecular portion containing 8 to 20 carbons. A surfactant for an embodiment is disodium laureth sulfosuccinate because it most effectively suspends particles of cement during the hydration process. For the purpose of foaming calcium sulfate alpha hemihydrate, an ethoxylated alkyl phenol surfactant with a hydrophobic molecular portion containing 8 to 13 carbons, produces optimal particle suspension properties for gypsum.

Maximum foaming of cementitious compositions occurs when the surfactant solution is prepared between 20 °C (68 degrees Fahrenheit) and 37.8 °C (100 degrees Fahrenheit). In an embodiment, the surfactant solution is prepared at approximately 32.2 °C (90 degrees Fahrenheit). This achieves a maximum foaming of the cementitious composition. Applicants have also determined that a deviation in water temperature from the optimum temperature range will increase the density of the foam by a factor of 80 kg/m^{3 (}5 pounds per cubic foot) for every 5.55 °C (10 degrees Fahrenheit) deviation. Thus, it is advantageous to keep the surfactant water solution temperature at approximately 32.2 °C (90 degrees Fahrenheit).

It may be possible to create a different process or use different apparatus to approximate the disclosed article of manufacture using a molding or overlay process whereby the mixture is poured onto or around a substrate that provides structural support until the mixture cures. The substrate material might then be removed by heating or solvent action, leaving a network of pores behind.

In the aqueous mixing and foaming step, it may be possible to combine the separate steps of high speed and low speed mixing into a single step for greater efficiency.

Another way of manufacturing similar materials includes utilizing different families of fibers, such as wood fibers, with the same process steps. However, this yields different material characteristics.

Another means of creating the foaming action in the disclosed method would be the use of a different surfactant. Polyvinyl alcohol is a known surfactant that has been used in similar applications. However, disodium laureth sulfosuccinate is a preferred surfactant.

Another way of entraining a gas into the aqueous mixture could utilize chemical means instead of the disclosed mechanical means.

Another embodiment might utilize beta gypsum as an alternative to portland cement or alpha gypsum. Additional process steps, such as adding a wax, may also be necessary to enhance the water tolerance of beta gypsum.

It is possible to expose the inner, porous structure of the material to impinging sound waves by punching holes through the dense skin layer, rather than sanding the board surface to remove the skin layer.

The described process does not require the incorporation of aggregate which is commonly used in other processes. Without aggregate the panels can be cut by conventional tools in the field. Additionally, the present process is continuous and the finished material can be lighter in color than that produced by other processes, thus requiring less paint.

The step of texturing enhances the acoustical performance of the panels. Ridges, holes or other elements that sculpt the surface of the panel will affect its acoustical performance as well as the board aesthetics. The texturing apparatus of the present invention creates less waste material and a better surface finish than prior art methods. Additionally, surface texturing, may occur while the material is still wet. The texturing method of the present invention creates less waste material and a better surface finish than traditional grinding or routing methods.

The method and apparatus for producing the acoustically absorbent cementitious porous panels is further illustrated in greater detail below:

### Dry Mixing

An initial step in an embodiment of the process involves dispensing the following ingredients: (1) cement, (typically portland cement), (2) polyester fibers; (typically polyethylene terephthalate (PET), having nominal lengths of 1.27 cm (± 0635 cm) (0.5 -inch (±0.25'')) and having nominal diameters of 12.7 µm to 177.8 µm (0.0005 inch to 0.007 inch) diameter fiber; and (3) calcium silicate, (typically wollastonite, or Orleans One). Referring to Figure 3, these dry ingredients can be fed separately or combined in a mixing apparatus 306, respectively, by: (1) cement feeder 303, wherein an amount of cement is weighed and fed for mixing; (2) a fiber feeder 304, wherein an amount of polyester fiber is weighed and fed for mixing; and (3) a calcium silicate feeder 318, wherein an amount of wollastonite is weighted and fed for mixing.

The cement feeder 303, the fiber feeder 304, and the wollastonite feeder 318 are connected to a tumble mixer 306, wherein the dry ingredients are dispersed evenly in a dry mixture. The tumble mixer 306 is connected to a dry feeder 307, herein an amount of material is weighed for further processing.

The dry mixing step can be carried out by other means capable of distributing the fibers in a fairly uniform fashion throughout the dry mix. Such method can include various mechanical methods such as agitators, blowers, mixers, or by vibration. A uniform distribution of the added fibers increases the strength of the formed panel by interlocking the matrix.

### Aqueous Mixing

A further step involves mixing the following liquid and gaseous components: (1) water; (2) surfactant; and (3) air. Referring to Figure 3, each is preferably metered, respectively by: (1) a control valve 301 on the water supply, wherein the desired amount of water is metered for mixing; (2) a control valve 302 on the surfactant supply, wherein the desired amount of surfactant is metered for mixing; and (3) control valve 300 on the air supply, wherein the desired amount of air is metered for mixing. The specific amounts of water, air, and surfactant, are fed to a mixing apparatus 305, wherein the mixing apparatus 305 thoroughly mixes the water and surfactant, and entrains air into the mixture to create an aqueous foam. The output of the foamer 305, is fed to the mixing apparatus. Additionally, the aqueous components are typically mixed and aerated or foamed at temperatures between 5 °C (41°F) to 75.6 °C (168°F). In an alternative embodiment the diluted surfactant solution can be mixed at temperatures between 14.4°C (58°F) to 61.1°C (142°F) or between 20°C(68°F) to 33.3°C (92°F). One such method of achieving such temperatures is to determine the temperature to such a range prior to mixing or the mix can be set to such a range.

### Dry and Aqueous Mixing

The dry mixture and the aqueous foam stream are combined in a mixing system comprising a continuous mixer 308, wherein the dry components are further dispersed and mixed with the aqueous foam, resulting in a wet mixture with component ingredients in the following proportions, by weight:
1. cementitious material - 53 to 68%
2. Water - 17 to 48%
3. An optional inorganic fiber such as wollastonite - 1 to 10%, 1% in the preferred embodiment
4. Polyester fibers - 0.05 to 5%, 1% in the preferred embodiment
5. Surfactant - 0.01 to 10%, 1% in the preferred embodiment

In this mixing stage, it has been noted that the surfactant facilitates the suspension and three-dimensional orientation of the fibers throughout the mixture. In addition, it has been found that an approximate 1.27 cm (0.5 inch) fiber length also facilitates the distribution of the fibers throughout the mixture. Mixing vessels adapted to combined cement material with liquids and/or foams, such as those found in the cement production and distribution industries, are suitable for use in this step of the apparatus.

### Dispensing

The foamed cementitious mixture then undergoes a dispensing operation at station 309 that moves the wet material onto a moving conveyor comprising 319: (1) a moving conveyor belt, wherein the output of the mixer is located in close proximity to the flexible moving belt supported from below such that the material is dispensed onto the moving belt; and (2) a side dam, or deckle, wherein a fixed vertical surface is in contact with the edges of the material as it moves on the belt, such that it is confined to a constant overall width. The side dam may be attached to the conveyor or may be stationary with respect to the conveyor. Alternatively, a deckle ejecting a high-velocity stream of water may also serve as a cutting or width-fixing means for the extruded foam.

### Gauging

The material dispensed onto the moving conveyor and is constrained in thickness by: (1) a gauging roller 310, wherein the material passes under a cylindrical roller that limits the thickness of the material. This process step can yield a preferable product thickness of 0.635 cm (0.25 inches) to 2.54 cm (1.0 inches). The gauging apparatus should be next to and separated a predetermined distance from a texturing station, as is explained below.

### Texturing

In this step, the material is subjected to a surface treatment by an embossing process, such as by an embossing roller 311. More specifically, the conveyor belt carries the material under a rotating cylindrical embossing roller, which impresses a decorative and/or acoustically functional pattern onto the surface of the material.

Gauging roller 310, embossing roller 311 and cutter 312 are generally separated by predetermined distances based on the cure rate of the gypsum or other cement used in the product. For example, in some cases, it may be desirable to allow for partial curing of the foam surface prior to embossing at station 311, in order to allow for a clear imprint of the embossing pattern or to effectively remove or puncture an outer skin of the material to enhance acoustic absorbability of one side of the material. If the cure time is known, then the distance is determined by multiplying the conveyor speed by the cure time.

### Cutting

In this step, the material is divided perpendicular to the direction of movement of the belt at regular intervals by a cutter apparatus 312. More specifically, the belt carries the material decorated under a cutting apparatus which cuts the material perpendicular to the travel of the conveyor belt at fixed intervals. The cutting mechanism may comprise any number of embodiments, including but not limited to a vertically reciprocating knife, a fly cutter or a water jet ejecting a high-velocity stream of water at regular intervals. The time length between sprays and the conveyor velocity will determine the length of material between cuts.

There is a fixed period of time between the steps of texturing and cutting during which the material partially cures. This time period is set by the speed of the conveyor 319 as it moves material continuously beginning with the step of dispensing. Thus, the distance between embossing roller 311 and cutter 312 is determined by multiplying the cure time by the conveyor speed.

### Drying

In this step, the conveyor carries the material into a drying chamber 313, and exposes the material to a nominal temperature of about 93.3°C (200° F). The drying step drives off excess water that is not bound in the crystalline structure of the material.

### Sanding

In this step, the conveyor 319 moves the dried material beneath a sanding drum 314, wherein the belt carrying the dried material passes under a rapidly spinning cylindrical drum covered with a sanding medium. This step removes the hard skin that develops during the curing and drying processes. Also, the sanding step may be omitted if the particular embossing is for decorative purposes. Optionally, if texturing is performed, a grit blaster may be used to provide a depth of the embossing or to impart a particular image into the surface of the product. The depth of the sanding will be less than the depth of the embossing. A vacuum port with a wide vacuum nozzle is placed in close proximity to the sanding drum and the surface of the product to remove waste material.

### Finish Cutting

The conveyor 319 moves the sanded boards to finish cutting 315 which includes (1) a side cutting apparatus, wherein the dried board is moved from the sanding to an apparatus that trims the board to a finished size and profile along two edges; and (2) an end cutting apparatus, wherein the dried board is moved from the first finish cutting operation to another apparatus for further trimming to the finished size and profile along the remaining two edges. The cutting apparatus may also be fitted to provide for a specific desired edge detail.

### Sealing and Painting

The treated boards are moved by conveyor into a paint spraying apparatus 316, wherein the finish-cut board travels along a belt to a spraying booth where aerosol paint is applied to the top surface of the material to obtain a desired color.

### Packaging

The finished boards are labeled, shrink-wrapped and boxed for warehousing and distribution at packager 317.

While embodiments have been illustrated and described above, it is recognized that variations may be made with respect to features and components of the invention. For example the type of cement utilized within the formula may vary depending upon desired properties of the material. Additionally, the type, length and denier of fiber may vary depending upon strength requirements of the end product to be constructed from the panel.

## Claims

1. A process for creating an acoustically absorbent porous panel comprising the steps of
- dispensing and conveying dry cement,
- dispensing and conveying dry fibrous material,
- mixing the dry fibrous material and the dry cement,
- aqueous mixing water, surfactant and air to create a foam,
- combining and mixing the foam and dry ingredients to form a foamed cementitious material comprising on a wet basis between 53% and 68% by weight cement, between 17% and 48% by weight water, between 0.05% and 5% by weight fibers, and between 0.01% and 10% by weight surfactant,
- regulating the temperature of the aqueous mixture to a temperature between 5 °C (41 °F) to 75.6 °C (168 °F), and
- drying the foamed cementitious material, to form an absorbent porous panel having a density between 160 kg/m³ (10 lbs/ft³) and 640 kg/m³ (40 lbs/ft³).

2. The process of claim 1 including combining and mixing the diluted surfactant solution and dry mix to form a foamed cementitious material comprising on a wet basis between 56% and 61% by weight cement, between 32% and 42% by weight water, between 0.28% and 1.3% by weight fibers, and between 0.7% and 2% by weight surfactant.

3. The process of claim 1, wherein the aqueous mixture is regulated to a temperature of between 20 °C (68 °F) and 37.8 °C (100 °F).

4. The process of claim 1, wherein the process is continuous and uses a conveyor.

5. The process of claim 4, further including dispensing the foamed cementitious material onto the conveyor.

6. The process of claim 5, further including gauging the thickness of the foamed cementitious material.

7. The process of claim 6, wherein the thickness of the foamed cementitious material is gauged to at least 0.635 cm (0.25 inches).

8. The process of claim 1, further including texturing the foamed cementitious material.

9. The process of claim 1, further including cutting the panel.

10. The process of claim 1, wherein the foamed cementitious material is dried to at least 5% or less moisture.

11. The process of claim 1, further including forming a dense skin on both a facing side and backing side of the panel wherein the dense skin comprises less than 2% of the total thickness of the panel.

12. The process of claim 11, wherein the skin is between 125 µm to 250 µm thick.

13. The process of claim 11, further including the step of removing the dense skin of the facing side of the panel.

14. The process of claim 13, wherein the step of removing the dense skin of the facing side includes sanding.

15. The process of claim 11, further including the step of applying an organic coating to the facing side of the panel.

16. The process of claim 1, further including adding calcium silicate to the dry mix.

17. The process of claim 16, wherein the calcium silicate comprises between 1% and 10% by weight of the foamed cementitious material.

18. The process of claim 1, further including forming pores within the foamed cementitious material.

19. The process of claim 18, wherein the diameter of the pores is between 1.5 mm and 40 µm.

20. The process of claim 19, wherein the pores have an average diameter from 50 µm to 200 µm.

21. The process of claim 18, wherein the pores are open to other pores creating pathways through the cementitious material whereby sound can be effectively absorbed.

22. The process of claim 1, wherein the panel is an acoustic ceiling tile.

23. The process of claim 1, wherein the Noise Reduction Coefficient of the panel is at least 0.7.

24. The process of claim 1, wherein the range for a Sound Transmission Coefficient is between 30 to 40.

25. The process of claim 1, wherein the cement is selected from the group consisting of portland, gypsum, sorrel, slag, fly ash, and calcium alumina cement.

## Patentansprüche

1. Verfahren zur Herstellung einer akustisch absorbierenden porösen Platte, das die Schritte umfasst
- Ausgeben und Fördern von Trockenzement,
- Ausgeben und Fördern von Trockenfasermaterial,
- Mischen des Trockenfasermaterials und des Trockenzements,
- wässriges Vermischen von Wasser, Oberflächenbehandlungsmittel und Luft zur Herstellung eines Schaums,
- Kombinieren und Mischen des Schaums mit Trockeningredienzien zur Bildung eines geschäumten zementartigen Materials, das auf einer Nassbasis zwischen 53 und 68 Gewichtsprozent Zement, zwischen 17 und 48 Gewichtsprozent Wasser, zwischen 0,05 und 5 Gewichtsprozent Fasern und zwischen 0,01 und 10 Gewichtsprozent Oberflächenbehandlungsmittel umfasst
- Regulieren der Temperatur der wässrigen Mischung auf eine Temperatur zwischen 5 °C (41 °F) bis 75,6 °C (168 °F) und
- Trocknen des geschäumten zementartigen Materials zur Bildung einer absorbierenden porösen Platte, die eine Dichte zwischen 160 kg/m³ (10 lbs/ft³) und 640 kg/m³ (40 lbs/ft³) aufweist.

2. Verfahren nach Anspruch 1, das ein Kombinieren und Mischen der verdünnten Oberflächenbehandlungslösung und einer Trockenmischung einschließt, um ein geschäumtes zementartiges Material zu bilden, das auf einer Nassbasis zwischen 56 und 61 Gewichtsprozent Zement, zwischen 32 und 42 Gewichtsprozent Wasser, zwischen 0,28 und 1,3 Gewichtsprozent Fasern und zwischen 0,7 und 2 Gewichtsprozent Oberflächenbehandlungsmittel umfasst.

3. Verfahren nach Anspruch 1, wobei die wässrige Mischung auf eine Temperatur von zwischen 20 °C (68 °F) und 37,8 °C (100 °F) reguliert wird.

4. Verfahren nach Anspruch 1, wobei das Verfahren kontinuierlich ist und eine Fördereinrichtung verwendet.

5. Verfahren nach Anspruch 4, das weiterhin ein Ausgeben des geschäumten zementartigen Materials auf die Fördereinrichtung einschließt.

6. Verfahren nach Anspruch 5, das weiterhin ein Zumessen der Dicke des geschäumten zementartigen Materials einschließt.

7. Verfahren nach Anspruch 6, wobei die Dicke des geschäumten zementartigen Materials auf mindestens 0,635 cm (0,25 Inch) zugemessen wird.

8. Verfahren nach Anspruch 1, das weiterhin ein Texturieren des geschäumten zementartigen Materials einschließt.

9. Verfahren nach Anspruch 1, das weiterhin ein Schneiden der Platte einschließt.

10. Verfahren nach Anspruch 1, wobei das geschäumte zementartige Material auf wenigstens 5% oder weniger Feuchtigkeit getrocknet wird.

11. Verfahren nach Anspruch 1, das weiterhin ein Ausbilden einer dichten Haut auf sowohl einer Vorderseite als auch auf einer Hinterseite der Platte einschließt, wobei die dichte Haut weniger als 2% der Gesamtdicke der Platte umfasst.

12. Verfahren nach Anspruch 11, wobei die Haut zwischen 125 µm bis 250 µm dick ist.

13. Verfahren nach Anspruch 11, das weiterhin den Schritt des Entfernens der dichten Haut der Vorderseite der Platte einschließt.

14. Verfahren nach Anspruch 13, wobei der Schritt des Entfernens der dichten Haut der Vorderseite Sandschleifen einschließt.

15. Verfahren nach Anspruch 11, das weiterhin den Schritt des Aufbringens einer organischen Beschichtung auf die Vorderseite der Platte einschließt.

16. Verfahren nach Anspruch 1, das weiterhin ein Zugeben von Calciumsilicat zu der Trockenmischung einschließt.

17. Verfahren nach Anspruch 16, wobei das Calciumsilicat zwischen 1 und 10 Gewichtsprozent des geschäumten zementartigen Materials umfasst.

18. Verfahren nach Anspruch 1, das weiterhin ein Ausbilden von Poren innerhalb des geschäumten zementartigen Materials einschließt.

19. Verfahren nach Anspruch 18, wobei der Durchmesser der Poren zwischen 1,5 mm und 40 µm beträgt.

20. Verfahren nach Anspruch 19, wobei die Poren einen durchschnittlichen Durchmesser von 50 µm bis 200 µm aufweisen.

21. Verfahren nach Anspruch 18, wobei die Poren zu anderen Poren hin offen sind, wobei Wege durch das zementartige Material geschaffen werden, durch die der Schall effektiv absorbiert werden kann.

22. Verfahren nach Anspruch 1, wobei die Platte eine akustische Deckenfliese ist.

23. Verfahren nach Anspruch 1, wobei der Geräuschreduzierungskoeffizient der Platte wenigstens 0,7 beträgt.

24. Verfahren nach Anspruch 1, wobei der Bereich für einen Schallübertragungskoeffizienten zwischen 30 und 40 liegt.

25. Verfahren nach Anspruch 1, wobei der Zement aus der Gruppe ausgewählt wird, die aus Portlandzement, Gips, Sorelzement, Schlacke, Flugasche und Calciumaluminiumoxidzement besteht.

## Revendications

1. Procédé de création d'un panneau poreux à absorption acoustique comprenant les étapes de
- distribution et transport d'un ciment sec,
- distribution et transport d'un matériau fibreux sec,
- mélange du matériau fibreux sec et du ciment sec,
- mélange aqueux d'eau, d'un agent tensioactif et d'air pour créer une mousse,
- combinaison et mélange de la mousse et d'ingrédients secs pour former un matériau cimentaire expansé comprenant sur une base humide entre 53% et 68% en poids de ciment, entre 17% et 48% en poids d'eau, entre 0,05% et 5% en poids de fibres, et entre 0,01% et 10% en poids d'agent tensioactif,
- régulation de la température du mélange aqueux à une température entre 5°C (41 °F) à 75,6°C (168°F), et
- séchage du matériau cimentaire expansé, pour former un panneau poreux absorbant ayant une densité entre 160 kg/m³ (10 lbs/ft³) et 640 kg/m³ (40 lbs/ft³).

2. Procédé selon la revendication 1 incluant la combinaison et le mélange de la solution d'agent tensioactif dilué et du mélange sec pour former un matériau cimentaire expansé comprenant sur une base humide entre 56% et 61% en poids de ciment, entre 32% et 42% en poids d'eau, entre 0,28% et 1,3% en poids de fibres, et entre 0,7% et 2% en poids d'agent tensioactif.

3. Procédé selon la revendication 1, dans lequel le mélange aqueux est régulé à une température d'entre 20°C (68°F) et 37,8°C (100°F).

4. Procédé selon la revendication 1, dans lequel le procédé est continu et utilise un transporteur.

5. Procédé selon la revendication 4, incluant en outre la distribution du matériau cimentaire expansé sur le transporteur.

6. Procédé selon la revendication 5, incluant en outre la mesure de l'épaisseur du matériau cimentaire expansé.

7. Procédé selon la revendication 6, dans lequel l'épaisseur du matériau cimentaire expansé est mesurée à au moins 0,635 cm (0,25 pouce).

8. Procédé selon la revendication 1, incluant en outre la texturation du matériau cimentaire expansé.

9. Procédé selon la revendication 1, incluant en outre la découpe du panneau.

10. Procédé selon la revendication 1, dans lequel le matériau cimentaire expansé est séché à au moins 5% ou moins d'humidité.

11. Procédé selon la revendication 1, incluant en outre la formation d'une peau dense sur à la fois un côté de face et un côté de dos du panneau, dans lequel la peau dense comprend moins de 2% de l'épaisseur totale du panneau.

12. Procédé selon la revendication 11, dans lequel la peau a une épaisseur entre 125 µm à 250 µm.

13. Procédé selon la revendication 11, incluant en outre l'étape d'enlèvement de la peau dense du côté de face du panneau.

14. Procédé selon la revendication 13, dans lequel l'étape d'enlèvement de la peau dense du côté de face inclut un sablage.

15. Procédé selon la revendication 11, incluant en outre l'étape d'application d'un revêtement organique sur le côté de face du panneau.

16. Procédé selon la revendication 1, incluant en outre l'ajout de silicate de calcium au mélange sec.

17. Procédé selon la revendication 16, dans lequel le silicate de calcium comprend entre 1% et 10% en poids du matériau cimentaire expansé.

18. Procédé selon la revendication 1, incluant en outre la formation de pores au sein du matériau cimentaire expansé.

19. Procédé selon la revendication 18, dans lequel le diamètre des pores est entre 1,5 mm et 40 µm.

20. Procédé selon la revendication 19, dans lequel les pores ont un diamètre moyen de 50 µm à 200 µm.

21. Procédé selon la revendication 18, dans lequel les pores sont ouverts sur d'autres pores, créant des voies à travers le matériau cimentaire, d'où il résulte que le son peut être efficacement absorbé.

22. Procédé selon la revendication 1, dans lequel le panneau est un carreau acoustique de plafond.

23. Procédé selon la revendication 1, dans lequel le Coefficient de Réduction de Bruit du panneau est au moins 0,7.

24. Procédé selon la revendication 1, dans lequel la plage d'un Coefficient de Transmission du Son est entre 30 à 40.

25. Procédé selon la revendication 1, dans lequel le ciment est choisi parmi le groupe consistant en un ciment Portland, un plâtre dur, un ciment magnésien, un laitier, un ciment aux cendres volantes, et un ciment alumineux.
